# EUROPÄISCHE PATENTSCHRIFT

(11) **EP 3 111 600 B1**
(45) Veröffentlichungstag und Bekanntmachung des Hinweises auf die Patenterteilung: **14.11.2018**
(21) Anmeldenummer: 15710095.9
(22) Anmeldetag: 20.02.2015
(51) Int. Cl.: H04L 12/417, H04L 12/44

(54) **VERFAHREN UND COMPUTERNETZWERK ZUM ÜBERTRAGEN VON NACHRICHTEN**
METHOD AND COMPUTER NETWORK FOR TRANSMITTING MESSAGES
PROCÉDÉ ET RÉSEAU D'ORDINATEURS POUR LA TRANSMISSION DE MESSAGES

(30) Priorität: 24.02.2014 AT 501382014
(43) Veröffentlichungstag der Anmeldung: 04.01.2017
(73) Patentinhaber: TTTech Computertechnik AG, 1040 Wien (AT)
(72) Erfinder: STEINER, Wilfried, A-1040 Wien (AT)
(74) Vertreter: Patentanwaltskanzlei Matschnig & Forsthuber OG
(86) Internationale Anmeldenummer: PCT/AT2015/050047
(87) Internationale Veröffentlichungsnummer: WO 2015/123712

(56) Entgegenhaltungen:
- WO-A1-2013/170285
- US-A1- 2011 235 648
- AL-NAYEEM ABDULLAH ET AL: "Middleware design for Physically-Asynchronous Logically-Synchronous (PALS) systems", 2013 PROCEEDINGS OF THE INTERNATIONAL CONFERENCE ON EMBEDDED SOFTWARE (EMSOFT), IEEE, 29. September 2013 (2013-09-29), Seiten 1-10, XP032524791, DOI: 10.1109/EMSOFT.2013.6658583 [gefunden am 2013-11-07]

## Beschreibung

Die Erfindung betrifft ein Verfahren zur Übertragung von Nachrichten in einem Computernetzwerk, wobei das Computernetzwerk Rechenknoten umfasst, welche Rechenkoten über zumindest einen Sternkoppler und/oder zumindest ein Multi-Hop Netzwerk miteinander verbunden sind, wobei jeder Rechenknoten über zumindest eine Kommunikationsverbindung mit dem zumindest einen Sternkoppler und/oder dem zumindest einen Multi-Hop Netzwerk verbunden ist, und wobei die Rechenknoten untereinander und mit dem zumindest einen Sternkoppler und/oder dem zumindest einen Multi-Hop Netzwerk Nachrichten austauschen.

Weiters betrifft die Erfindung ein Computernetzwerk, insbesondere ein Echtzeit-Computernetzwerk zur Übertragung von Nachrichten, wobei das Computernetzwerk Rechenknoten umfasst, welche Rechenkoten über zumindest einen Sternkoppler und/oder zumindest ein Multi-Hop Netzwerk miteinander verbunden sind, wobei jeder Rechenknoten über zumindest eine Kommunikationsverbindung mit dem zumindest einen Sternkoppler und/oder dem zumindest einen Multi-Hop Netzwerk verbunden ist, und wobei die Rechenknoten untereinander und mit dem zumindest einen Sternkoppler und/oder dem zumindest einen Multi-Hop Netzwerk Nachrichten austauschen.

Bei einem solchen Verfahren bzw. Computersystem ist eine erste Gruppe von Komponenten vorgesehen, wobei die Komponenten der ersten Gruppe zeitgesteuerte Nachrichten nach einem Kommunikationsschedule versenden und/oder weiterleiten und/oder empfangen, wobei die erste Gruppe eine, zwei oder mehrere Komponente(n) umfasst, und wobei jede Komponente der ersten Gruppe entweder ein Rechenknoten, ein Sternkoppler oder ein Sternkoppler eines Multi-Hop Netzwerkes ist, und es ist eine zweite Gruppe von Komponenten vorgesehen, wobei die Komponenten der zweiten Gruppe Nachrichten nicht nach einem Kommunikationsschedule versenden und/oder weiterleiten und/oder empfangen, wobei die zweite Gruppe eine, zwei oder mehrere Komponente(n) umfasst, und wobei jede Komponente der zweiten Gruppe entweder ein Rechenknoten, ein Sternkoppler oder ein Sternkoppler eines Multi-Hop Netzwerkes ist, wobei zumindest eine Komponente der ersten Gruppe von Komponenten eine, zwei, oder mehrere zeitgesteuerte Nachrichten entsprechend dem Kommunikationsschedule an eine, zwei oder mehrere Komponenten der zweiten Gruppe von Komponenten sendet.

Die Erfindung liegt im Bereich von Computernetzwerken, insbesondere im Bereich verteilter Echtzeitsysteme, wobei ein solches Computernetzwerk, insbesondere Echtzeitsystem zum Beispiel aus folgenden Arten von aktiven Komponenten bestehen kann: Rechenknoten und Sternkoppler. Rechenknoten exekutieren Funktionen wie zum Beispiel das Messen von Eigenschaften physikalischer Prozesse mittels geeigneter Sensorik (Sensoren), die Berechnung von Stellgrößen, oder die Aktivierung von Aktuatoren, wie zum Beispiel Ventilen. Sternkoppler empfangen von Rechenknoten und/oder anderen Sternkopplern Nachrichten und leiten die Nachrichten an Rechenknoten und/oder Sternkoppler weiter. Sternkoppler sind zum Beispiel Bridges, Switches, und/oder Router in einer kabelgebunden Kommunikation oder Access Points in einer kabellosen Kommunikation. Rechenknoten sind mit anderen Rechenknoten und/oder Sternkopplern mittels kabelgebundenen oder kabellosen, vorzugsweise bidirektionalen Verbindungen (d.h., Kommunikationsverbindungen) verbunden. Des Weiteren können auch Sternkoppler durch kabelgebundene oder kabellose, vorzugsweise bidirektionale Verbindungen miteinander verbunden sein.

Die Komponenten eines solchen Echtzeitsystems, also die Sternkoppler und Rechenknoten, kommunizieren mittels Nachrichten, welche entsprechend eines oder mehrerer Kommunikationsschedules übertragen werden. Bei den Nachrichten kann es sich zumindest teilweise auch um zeitgesteuerte Nachrichten handeln.

Ein eingangs genanntes bzw. ähnliches Verfahren und Computernetzwerk ist in der US 2011/0235648 A1 beschrieben.

Ein Verfahren zur Übertragung von ereignisgesteuerten und zeitgesteuerten Nachrichten ist in der WO 2013/170285 A1 beschrieben.

Es ist eine Aufgabe der Erfindung, in einem solchen Computernetzwerk, insbesondere Echtzeitsystem kostengünstig verteilte und koordinierte Kommunikation zu erreichen. Alternativ oder zusätzlich ist es eine Aufgabe der Erfindung, in einem solchen Computernetzwerk, insbesondere Echtzeitsystem kostengünstig verteilte und koordinierte Berechnungen und/oder Kontrollschleifen zu ermöglichen.

Solche koordinierte Berechnungen können beispielsweise Grundlage in dem sogenannten "Physically Asynchronous Logically Synchronous (PALS)" Berechnungsmodell sein. Hier werden Berechnungen in unterschiedlichen Rechenknoten in Runden eingeteilt, die zeitlich synchronisiert gestartet und beendet werden. Ein solches Berechnungsmodell ist hilfreich bei der Implementierung von fehlertoleranten Systemen: redundante Berechnungen in unterschiedlichen Rechenknoten werden koordiniert, sodass das Management der Redundanz vereinfacht wird. Derartige Berechnungsmodelle kommen zum Beispiel in der Avionics Industrie zur Anwendung. PALS Systeme sind z.B. beschrieben in Al-Nayeem Abdullah et al: "Middleware design for Physically-Asynchronous Logically-Synchronous (PALS) systems", 2013 Proceedings of the International Conference on embedded Software (EMSOFT), IEEE, 29. September 2013, Seiten 1 - 10*.*

Kontrollschleifen kommen beispielsweise zur Anwendung beim automatisierten Regeln der Temperatur in einem Heizkessel in der chemischen Industrie oder bei "x-by-wire" Systemen in der Automobil- oder Luftfahrtindustrie.

Die Angabe dieser Einsatzmöglichkeiten ist lediglich beispielhaft und soll den Schutzbereich der Anmeldung nicht beschränken.

Diese Aufgabe wird mit einem eingangs erwähnten Verfahren und Computernetzwerk dadurch gelöst, dass erfindungsgemäß
jeder der Rechenknoten der zweiten Gruppe von Komponenten auf den Empfang einer zeitgesteuerten Nachricht, beispielsweise in Abhängigkeit von der empfangenen Nachricht, insbesondere in Abhängigkeit von dem Inhalt der empfangenen Nachricht, auf eine der folgenden Weisen reagiert:
*) Auslesen eines aktuellen Wertes/der aktuellen Werte von einem/von zwei oder mehreren lokalen Sensor/Sensoren;
*) Ändern des Zustandes bzw. der Zustände eines oder mehrerer lokaler Aktoren;
*) Ausführen einer anwendungsspezifischen Aufgabe;
*) Versenden einer neue Nachricht,
und/oder
-) jeder Sternkoppler der zweiten Gruppe von Komponenten auf den Empfang einer zeitgesteuerten Nachricht, beispielsweise in Abhängigkeit von der empfangenen Nachricht, insbesondere in Abhängigkeit von dem Inhalt der empfangenen Nachricht, auf eine der folgenden Weisen reagiert:
   *) Versenden einer neuen Nachricht, oder
   *) Weiterleiten der empfangenen, zeitgesteuerten Nachricht, wobei die Weiterleitung nicht nach einem Kommunikationsschedule erfolgt, wobei
   für den maximal zulässigen zeitlichen Abstand zwischen dem Empfangszeitpunkt einer zeigesteuerten Nachricht bei einer Komponente der zweiten Gruppe und dem Zeitpunkt der Reaktion dieser Komponente der zweiten Gruppe, insbesondere dem Sendezeitpunkt des Sendens einer Nachricht dieser Komponente der zweiten Gruppe, eine obere Schranke vorgesehen ist.

Bei dem oben genannten Ausführen einer anwendungsspezifischen Aufgabe handelt es sich dabei um Aufgaben, die über den Empfang der Nachricht hinausgehen, zum Beispiel um die Berechnung eines Stellwertes für eine Kontrollschleife.

Die Nachricht, mit der eine Komponente der zweiten Gruppe wie oben beschrieben erfindungsgemäß antwortet kann dabei beispielsweise einen Sensorwert beinhalten. In diesem Fall ist es hilfreich, wenn die Nachricht schnell und mit kleinem Übertragungsjitter übertragen wird, wie dies weiter unten noch näher erörtert wird.

Die Nachricht, mit der eine Komponente der zweiten Gruppe wie oben beschrieben erfindungsgemäß antwortet, kann beispielsweise auch einen Diagnosewert enthalten, wie zum Beispiel die Anzahl von inkorrekt empfangenen Nachrichten oder Information über die Auslastung von internen Speichern. Auch in diesen Fällen kann es von Vorteil sein, wenn die Nachricht schnell und mit kleinem Übertragungsjitter übertragen wird, um eine beispielsweise rechtzeitige systemweite Recovery-Aktion, z.B. einen Systemrestart auszuführen.

Der Begriff Verbindung (auch als Kommunikationsverbindung, Leitung oder Kommunikationsleitung bezeichnet) bezeichnet dabei sowohl kabelgebundene als auch kabellose Verbindungen. Falls es von Bedeutung ist, ob die Verbindung kabellos oder kabelgebunden ist, wird dies separat hervorgehoben.

Die erfindungsgemäße Reaktion eines Rechenknotens bzw. Sternkopplers wie oben beschrieben hängt dabei von der empfangenen zeitgesteuerten Nachricht bzw. deren Inhalt ab. Dies bedeutet, dass ein Rechenknoten bzw. Sternkoppler je nach empfangener Nachricht unterschiedlich reagiert, d.h. ein betrachteter Rechenknoten/Sternkoppler reagiert nicht zwangsläufig jedes Mal bei dem Empfang einer zeitgesteuerten Nachricht genau nur mit einer (gleichbleibenden) Reaktion, sondern kann auch jedes Mal mit einer anderen Reaktion antworten. Dies hängt jedes Mal von der zeitgesteuerten Nachricht ab.

Natürlich kann auch vorgesehen sein, dass gewissen Komponenten (oder alle Komponenten) genau nur eine Aufgabe haben, in diesem Fall reagiert eine solche Komponente beim Empfang einer entsprechenden zeitgesteuerten Nachricht immer gleich.

Gemäß der Erfindung können für die zweite Gruppe von Komponenten solche Komponenten verwendet werden, die ohne Kommunikationsschedule auskommen. Solche Komponenten sind kostengünstig, wobei sich der Kostenvorteil bei den Komponenten bzw. dem gesamten Echtzeitsystem unter anderem aus folgenden Gründen ergibt:
(a) Rechenknoten/Sternkoppler der zweiten Gruppe müssen ihre lokalen Uhren nicht zueinander synchronisieren bzw. benötigen gar keine lokalen Uhren oder können mit Quarzen schlechter Qualität auskommen,
(b) Rechenknoten/Sternkoppler der zweite Gruppe müssen lokal kein Kommunikationsschedule abspeichern, und
(c) es können für die Funktionen der Komponenten der zweiten Gruppe bestehende Rechenknoten/Sternkoppler verwendet werden, ohne deren Funktionalität um zeitgesteuerte Kommunikation erweitern zu müssen.

Im Stand der Technik hingegen arbeiten alle Komponenten nach einem Kommunikationsschedule, sodass in diesem Fall auch jene Komponenten, welche den Komponenten der zweiten Gruppe bei der vorliegenden Erfindung entsprechen würden, selbsttätig nach ihrem Schedule die jeweiligen Tätigkeit ausführen würden, ein Anfragen aus der ersten Gruppe wäre in diesem Fall nicht nötig. Durch das erfindungsgemäße Reagieren der Rechenknoten und/oder Sternkoppler der zweiten Gruppe ist aber ein Kommunikationsschedule bei diesen Komponenten bei der Erfindung nicht notwendig, sodass sich die entsprechende Kostenersparnis ergibt, ohne dass sich das Echtzeitverhalten des Systems verschlechtert.

Bevorzugte Ausführungsformen des erfindungsgemäßen Verfahrens und des erfindungsgemäßen Computernetzwerkes, welche für sich alleine oder in beliebiger Kombination miteinander realisiert sein können, sind im Folgenden beschrieben:
*) Von Vorteil kann es sein, wenn eine, zwei oder mehrere der Kommunikationsverbindungen, beispielsweise alle Kommunikationsverbindungen kabelgebunden sind. Bei Anwendung des erfindungsgemäßen Verfahrens in einem kabelgebundenen Übertragungsverfahrens können gleichzeitig mehrere Rechenknoten ohne Kommunikationsschedule mittels zeitgesteuerter Nachrichten angesteuert werden.
*) Alternativ oder zusätzlich kann vorgesehen sein, dass eine, zwei oder mehrere der Kommunikationsverbindungen, beispielsweise alle Kommunikationsverbindungen kabellos realisiert sind. Vorzugsweise sind in diesem Zusammenhang die Sendezeitpunkte der zeitgesteuerten Nachrichten im Kommunikationsschedule derart gewählt, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

Bei Anwendung des erfindungsgemäßen Verfahrens in einem (teilweise) kabellosen Netzwerk stellt das Kommunikationsschedule somit sicher, dass auf mehreren kabellosen Kommunikationsverbindungen nur dann gleichzeitig kommuniziert wird, wenn keine störende Beeinflussung eintritt, z.B. wenn die kabellosen Kommunikationsverbindungen räumlich weit genug voneinander entfernt sind, oder wenn auf unterschiedlichen Kommunikationsfrequenzen gesendet wird. Das Kommunikationsschedule legt dabei auch fest, über welche Leitungen kommuniziert wird.

Durch die kollisionsbehaftete Natur des kabellosen Übertragungsmediums ist bei einem Versuch gleichzeitiger Übertragung mehrerer Nachrichten über unterschiedliche, nahe beieinander liegende kabellose Übertragungsstrecken regelmäßig die Zerstörung oder Verzögerung einzelner Nachrichten in Kauf zu nehmen. Diese Zerstörung oder Verzögerung von Nachrichten stellt die Nutzung des kabellosen Übertragungsmediums für gewisse Anwendungszwecke im Bereich "Echtzeit-Steuerung" und anderen von Echtzeitanforderungen an die Kommunikation geprägten Anwendungszwecken in Frage.

Durch die vorliegende vorteilhafte Ausgestaltung/Erfindung kann die Zerstörung und Verzögerung von Nachrichten auf kabellosen Übertragungsmedien durch Koordinations-Maßnahmen weitestgehend vermieden und dadurch die Nutzung ebendieses Übertragungsmediums auch für die vorgenannten Anwendungszwecke sinnvoll möglich gemacht werden. Die entsprechenden Koordinierungs-Maßnahmen sind entsprechend derart gestaltet, dass die kabellosen Nachrichtenübertragungen zueinander zeitlich so angeordnet und durchgeführt werden, dass eine Kollision dieser Nachrichten untereinander zuverlässig vermieden wird.
*) Mit Vorteil kann auch vorgesehen sein, dass zwei oder mehr Sternkoppler der ersten Gruppe von Komponenten gleichzeitig oder zu überlappenden Zeitpunkten zeitgesteuerte Nachrichten an Rechenknoten schicken und/oder weiterleiten. Dadurch ergibt sich für den Designer des verteilten Echtzeitsystems die Freiheit, Rechenknoten an unterschiedliche Sternkoppler zu verbinden und trotzdem den Vorteil der Erfindung zu nutzen, wenn zwei oder mehr Sternkoppler synchronisiert Nachrichten schicken und/oder weiterleiten.
*) Vorzugsweise ist vorgesehen, dass die Übertragung von Nachrichten über kabelgebundene Kommunikationsverbindungen nach einem IEEE 802.3 Standard oder einem darauf aufbauenden oder nachfolgenden Standard erfolgt.
*) Vorzugsweise ist vorgesehen, dass die Übertragung von Nachrichten über kabellose Kommunikationsverbindungen nach einem IEEE 802.11 Standard oder einem darauf aufbauenden oder nachfolgenden Standard erfolgt oder nach einem IEEE 802.15 Standard oder einem darauf aufbauenden oder nachfolgenden Standard erfolgt.
*) Vorzugsweise ist vorgesehen, dass für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

Mit den erfindungsgemäßen Merkmalen des Anspruchs 1 wird ein minimaler Übertragungsjitter der Nachrichten bis zu einer Komponente der zweiten Gruppe erreicht. Durch das erfindungsgemäße Vorsehen einer oberen Schranke, innerhalb welcher diese Komponente der zweiten Gruppe dann reagiert, wird zusätzlich ein minimaler Übertragungsjitter über diese Komponente der zweiten Gruppe hinaus minimiert.

Die obere Schranke für Komponenten der zweiten Gruppe ist für eine betrachtete Komponente jeweils konstant, kann aber für unterschiedliche Komponenten unterschiedlich sein. Beispielsweise wird die obere Schranke mit der Worst-Case Execution Time Analyse berechnet.

Vorzugsweise ist vorgesehen, dass jede Komponente der zweiten Gruppe Nachrichten in einem konstanten Zeitabstand vor Erreichen ihrer oberen Schranke reagiert, insbesondere Nachrichten versendet, wobei der konstante Zeitabstand vorzugsweise gegen Null geht.

Eine Komponente ohne Kommunikationsschedule kann dazu so implementiert werden, dass sie ihren Antwortframe (Nachricht) möglichst immer zu einen Zeitpunkt schickt, der möglichst nahe an der oberen Schrank liegt. Schickt die Komponente Nachrichten immer (also konstant) möglichst nahe an der oberen Schranke, dann ist der Übertragungsjitter minimiert.

Bei der Implementierung kann dazu z.B. vorgesehen sein, dass eine Komponente, etwa ein Rechenknoten, Sensorwerte gerade vor Erreichen der oberen Schranke vom Sensor bezieht, oder die Komponente wird derart realisiert, dass die obere Schranke von Haus aus klein ist.

Im Folgenden ist die Erfindung an Hand der Zeichnung an Hand einer beispielhaften Realisierung näher erörtert. Es zeigt
Fig. 1 ein Beispiel eines Netzwerks, in welchem Rechenknoten mittels Kommunikationsverbindungen, bei welchen es sich vorteilhafterweise um bi-direktionale Kommunikationsverbindungen handelt, mit einem Sternkoppler verbunden sind,
Fig. 2 mehrere Sternkoppler eines Netzwerkes, welche miteinander verbunden sind und Rechenknoten des Netzwerkes, welche jeweils nur mit einer Teilmenge dieser Sternkoppler verbunden sind,
Fig. 3 ein Beispiel für zeitgesteuerte Kommunikation an Hand eines Flussdiagramms,
Fig. 4 anhand eines Flussdiagramms ein weiteres Beispiel für zeitgesteuerte Kommunikation,
Fig. 5 ein Beispiel einer erfindungsgemäßen deterministischen Kommunikation in einem Netzwerk aus Fig. 1 anhand eines Flussdiagramms,
Fig. 6 Beispiel einer erfindungsgemäßen deterministischen Kommunikation in einem Netzwerk aus Fig. 2 anhand eines Flussdiagramms,
Fig. 6a ein weiteres Beispiel einer erfindungsgemäßen deterministischen Kommunikation in einem Netzwerk aus Fig. 2 anhand eines Flussdiagramms,
Fig. 7 ein Beispiel eines Netzwerks, in welchem Rechenknoten mittels Kommunikationsverbindungen, vorzugsweise bi-direktionaler Kommunikationsverbindungen mit Sternkopplern verbunden sind,
Fig. 8 ein Beispiel deterministischer Kommunikation in einem Netzwerk aus Fig. 7 an Hand eines Flussdiagrammes,
Fig. 8a ein weiteres Beispiel deterministischer Kommunikation in einem Netzwerk aus Fig. 7 an Hand eines Flussdiagrammes,
Fig. 8b noch ein weiteres Beispiel deterministischer Kommunikation in einem Netzwerk aus Fig. 7 an Hand eines Flussdiagrammes,
Fig. 9 ein Netzwerk entsprechend Fig. 1, mit zusätzlich einem Sensor und einem Aktuator,
Fig. 10 das Ethernet Nachrichten Format als Beispiel für Nachrichten, die in einem verteilten Echtzeitsystem über kabelgebundene Verbindungen kommuniziert werden, und
Fig. 11 das Nachrichten Format des IEEE 802.11 Standards als Beispiel für Nachrichten, die in einem verteilten Echtzeitsystem über kabellose Verbindungen kommuniziert werden.

Vorausgeschickt wird, dass der Informationsaustausch zwischen Komponenten Nachrichten-orientiert funktioniert, zum Beispiel mittels Ethernet Nachrichten auf kabelgebundenen Verbindungen und mittels 802.11 Nachrichten über kabellose Verbindungen. Im Folgenden wird außerdem bei der Übertragung von Nachrichten nicht näher auf das Nachrichtenformat eingegangen. Im Speziellen wird nicht darauf eingegangen und der Einfachheit angenommen, dass - soweit dies vorgesehen ist - bei einem Übergang zwischen kabelgebundenen und kabellosen Verbindungen eine Übersetzung der Nachrichtenformate in standardkonforme Formate (wie zum Beispiel IEEE 802.3 und 802.11 oder 802.15) durchgeführt wird, wie dies aus dem Stand der Technik bekannt ist und hier nicht näher beschrieben werden soll.

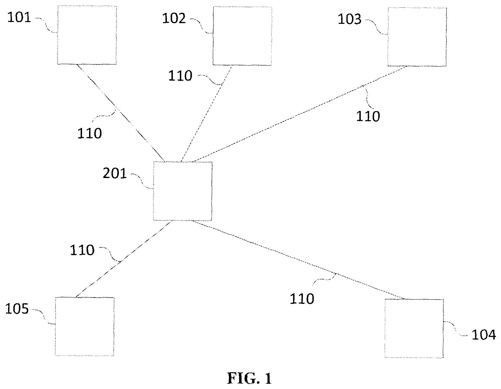

In Fig. 1 ist ein Beispiel eines Netzwerks dargestellt, in welchem Rechenknoten 101 - 105 mittels Kommunikationsverbindungen 110, bei welchen es sich vorteilhafterweise um bidirektionale Kommunikationsverbindungen handelt, mit einem Sternkoppler 201 verbunden sind. Die Rechenknoten 101 - 105 tauschen Nachrichten miteinander aus, indem sie diese an den Sternkoppler 201 schicken, und dieser die Nachrichten an die entsprechenden Empfänger weiterleitet. Des Weiteren kann ein Sternkoppler 201 auch selbst Nachrichten generieren und an Rechenknoten 101 - 105 versenden.

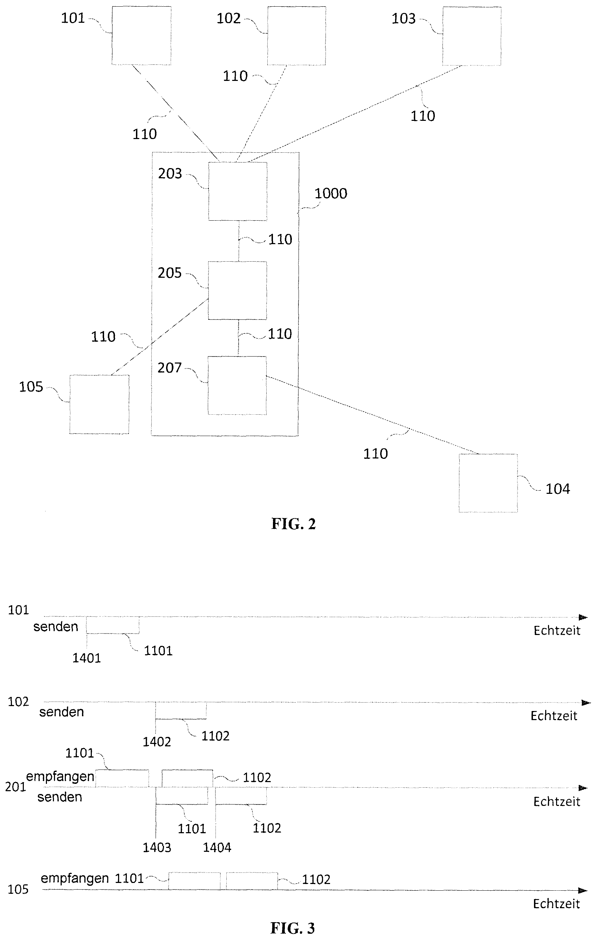

In Fig. 2 ist dargestellt, dass auch mehrere Sternkoppler 203, 205, 207 eines Netzwerkes miteinander verbunden sein können und Rechenknoten 101 - 105 des Netzwerkes jeweils nur mit einer Teilmenge dieser Sternkoppler 203, 205, 207 verbunden wird. Die Kommunikation zwischen zwei Rechenknoten kann dann auch über zwei oder mehr Sternkoppler 203, 205, 207 erfolgen. Solche Netzwerkstrukturen werden Multi-Hop Netzwerke 1000 genannt. In der folgenden Beschreibung wird nicht explizit auf Multi-Hop Netzwerke eingegangen, es ist aber bekannter Stand der Technik, dass ein einzelner Sternkoppler 201 (Fig. 1) durch ein Multi-Hop Netzwerk 1000 (Fig. 2) ersetzt werden kann.

In Fig. 3 ist anhand eines Flussdiagramms beispielhaft zeitgesteuerte Kommunikation illustriert. In diesem Beispiel übertragen die Rechenknoten 101 und 102 wie in Fig. 1 dargestellt, zeitgesteuert Nachrichten 1101 und 1102 über den Sternkoppler 201 an den Rechenknoten 105. Die Besonderheit einer zeitgesteuerten Kommunikation liegt darin, dass die Sendezeitpunkte 1401, 1402 und/oder die Weiterleitungszeitpunkte 1403, 1404 der zeitgesteuerten Nachrichten bereits vor dem Versenden der Nachricht bekannt sind. Die Sendezeitpunkte 1401, 1402 und/oder die Weiterleitungszeitpunkte 1403, 1404 können zum Beispiel bereits während des Designs des verteilten Echtzeitsystems festgelegt werden. Die Festlegung der Sendezeitpunkte, Weiterleitungszeitpunkte, Empfangszeitpunkte oder einer Teilmenge dieser Zeitpunkte wird als das Kommunikationsschedule bezeichnet. Eine Synchronisation von lokalen Uhren in den Rechenknoten und Sternkopplern ermöglicht es, dass das Kommunikationsschedule in den Rechenknoten und/oder Sternkopplern synchron ausgeführt wird. Zur Synchronisation der lokalen Uhren kann ein Uhrensynchronisationsprotokoll verwendet werden, wie zum Beispiel SAE AS6802, IEEE 1588, oder IEEE 802.1AS.

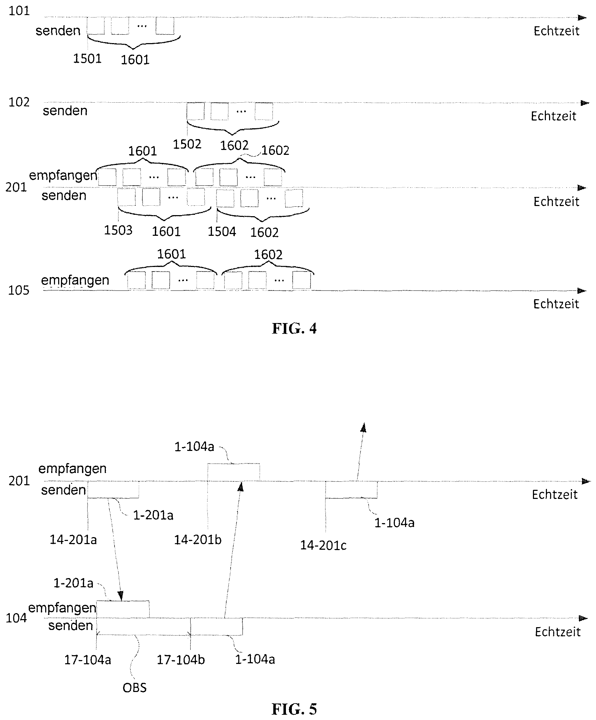

In Fig. 4 ist ein weiteres Beispiel anhand eines Flussdiagramms dargestellt, welches zeitgesteuerte Kommunikation illustriert. Hier werden einem Sendezeitpunkt 1501, 1502 und einem Weiterleitungszeitpunkt 1503, 1504 jeweils Gruppen 1601, 1602 von zeitgesteuerten Nachrichten zugeordnet. Wie in Fig. 4 dargestellt bleibt die Zuordnung von Nachrichten zu den Gruppen 1601, 1602 bestehen. Dies ist allerdings nicht notwendigerweise der Fall, so könnte der Sternkoppler 201 nur den Weiterleitungszeitpunkt 1503 implementieren und, wenn der Weiterleitungszeitpunkte 1503 erreicht ist, alle Nachrichten der Gruppen 1601 und 1602 weiterleiten. Im Allgemeinen kann sich die Zuordnung von Nachricht zu einer Gruppe pro Rechenknoten und Sternkoppler beliebig neu gestalten.

In Fig. 5 ist ein Beispiel einer erfindungsgemäßen deterministischen Kommunikation in einem Netzwerk aus Fig. 1 anhand eines Flussdiagramms illustriert. In diesem Beispiel wird davon ausgegangen, dass erfindungsgemäß der Rechenknoten 104 kein Kommunikationsschedule exekutiert, d.h., der Rechenknoten 104 verschickt keine zeitgesteuerten Nachrichten. Stattdessen reagiert der Rechenknoten 104 auf den Empfang einer Nachricht 1-201a, indem der Rechenknoten 104 eine Nachricht 1-104a als Antwort versendet.

In diesem Beispiel wird die Nachricht 1-201a zeitgesteuert versendet, d.h., der Sendezeitpunkt 14-201a ist bereits vor dem Versenden der Nachricht bekannt, z.B. bereits während des Designs des verteilten Echtzeitsystems. Der Rechenknoten 104 empfängt die Nachricht 1-201a zum Zeitpunkt 17-104a und reagiert auf den Empfang der Nachricht 1-201a zum Zeitpunkt 17-104b mit dem Versenden der eigenen Nachricht 1-104a an den Sternkoppler 201. Der Sternkoppler empfängt die Nachricht 1-104a zum Zeitpunkt 14-201b.

Mit bekannten Methoden aus dem Stand der Technik, z.B. der sogenannten Worst-Case Execution Time Analyse (siehe z.B. *"*The worst-case execution-time problem - overview of methods and survey of tools", Journal ACM Transactions on Embedded Computing Systems (TECS), Volume 7 Issue 3, April 2008) kann eine obere Schranke OBS des maximal zeitlichen Abstandes zwischen dem Empfangszeitpunkt 17-104a und dem Sendezeitpunkt 17-104b im Rechenknoten 104 ermittelt werden. Diese obere Schranke OBS kann beim Erstellen des Kommunikationsschedules berücksichtigt werden. So kann zum Beispiel der Sternkoppler 201 den Weiterleitungszeitpunkt 14-201c, zu dem die Nachricht 1-104a im Netzwerk weitergeleitet wird (z.B. zum Rechenknoten 101), als zeitgesteuerten Zeitpunkt einplanen, indem bei der Erstellung des Kommunikationsschedules mittels der oberen Schranke OBS berücksichtigt wird, wo der späteste mögliche Empfangszeitpunkt 14-201b der Nachricht 1-104a liegen kann.

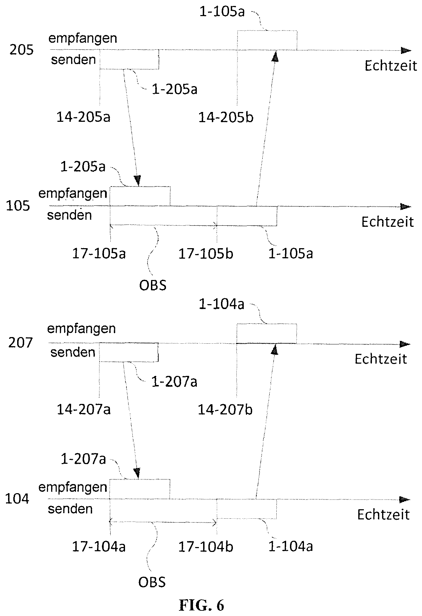

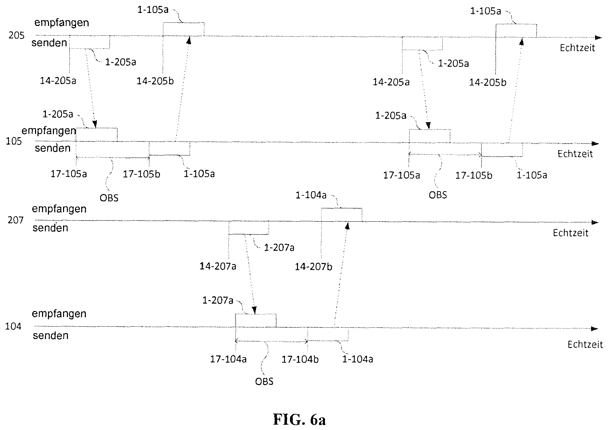

In Fig. 6 ist ein Beispiel einer erfindungsgemäßen deterministischen Kommunikation in einem Netzwerk aus Fig. 2 anhand eines Flussdiagramms illustriert. In diesem Beispiel wird davon ausgegangen, dass die beiden Rechenknoten 104 und 105 kein Kommunikationsschedule exekutieren, d.h., die Rechenknoten 104 und 105 verschicken keine zeitgesteuerten Nachrichten. Stattdessen reagieren der Rechenknoten 104 und 105 auf den Empfang einer Nachricht 1-205a bzw. 1-207a, indem die Rechenknoten 104 und 105 jeweils eine Nachricht 1-105a und 1-104a als Antwort versenden. In dem Beispiel in Fig. 6 wird davon ausgegangen, dass die Verbindung zwischen Rechenknoten 105 und Sternkoppler 205 dergestalt ist, dass ein gleichzeitiges zeitgesteuertes Abfragen durch die Sternkoppler 205 und 207 der Rechenknoten 104 und 105 möglich ist. Dies lässt sich insbesondere dann realisieren, wenn die Verbindung zwischen Rechenknoten 104 und Sternkoppler 207 als kabelgebundene Verbindung realisiert ist.

In Fig. 6a ist ein weiteres Beispiel einer erfindungsgemäßen deterministischen Kommunikation in einem Netzwerk aus Fig. 2 anhand eines Flussdiagramms illustriert. In diesem Beispiel wird davon ausgegangen, dass die Rechenknoten 104 und 105 kein Kommunikationsschedule exekutieren, d.h., die Rechenknoten 104 und 105 verschicken keine zeitgesteuerten Nachrichten. Stattdessen reagieren der Rechenknoten 104 und 105 auf den Empfang einer Nachricht 1-205a bzw. 1-207a, indem die Rechenknoten 104 und 105 jeweils eine Nachricht 1-104a und 1-105a als Antwort versendet. In diesem Beispiel wird davon ausgegangen, dass sich die gleichzeitigen Übertragungen auf den Leitungen 110 zwischen den Sternkopplern 205 und 207 und den Rechenknoten 105 und 104 stören würden. Dies ist insbesondere dann der Fall, wenn - wie in diesem Beispiel angenommen - die Verbindung zwischen Rechenknoten 105 und Sternkoppler 205 sowie die Verbindung zwischen Rechenknoten 104 und Sternkoppler 207 als kabellose Verbindung realisiert ist. Um eine solche Störung zu vermeiden, wird das Kommunikationsschedule derart ausgelegt, dass keine gleichzeitige Kommunikation erfolgt, nämlich indem wie gezeigt die Sternkoppler 205 und 207 ihre zeitgesteuerten Nachrichten 1-205a und 1-207a zeitlich weit genug voneinander entfernt versenden, sodass zu jedem Zeitpunkt immer nur eine Übertragungen einer der Nachrichten 14-205a und 14-207a und Antwortnachrichten 1-104a, 1-105a stattfindet.

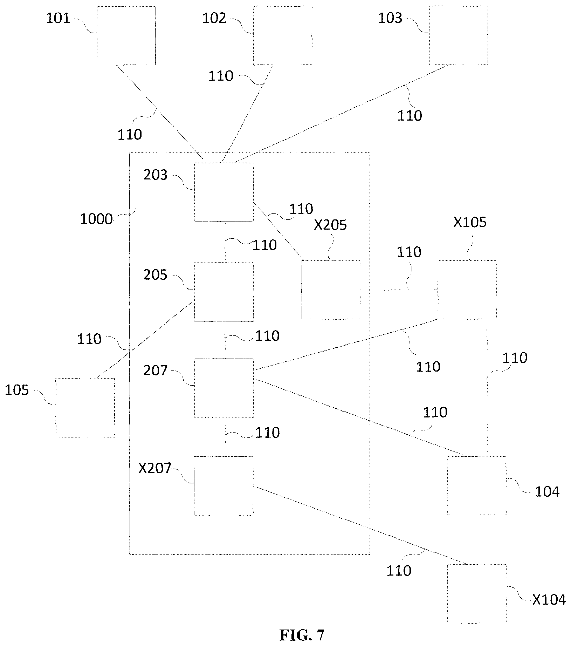

In Fig. 7 ist ein Beispiel eines Netzwerks dargestellt, in dem Rechenknoten 101-105, X104, X105 mittels Kommunikationsverbindungen 110, vorzugsweise bi-direktionaler Kommunikationsverbindungen 110 mit Sternkopplern 203, 205, 207, X205, X207 verbunden sind. Die Rechenknoten 101-105, X104, X105 tauschen Nachrichten miteinander aus, indem sie diese an die Sternkoppler 203, 205, 207, X205, X207 schicken, und diese die Nachrichten an die entsprechenden Empfänger und/oder andere Sternkoppler 203, 205, 207, X205, X207 weiterleitet. Des Weiteren kann ein Sternkoppler 203, 205, 207, X205, X207 auch selbst Nachrichten generieren und an Rechenknoten 101-105, X104, X105 versenden.

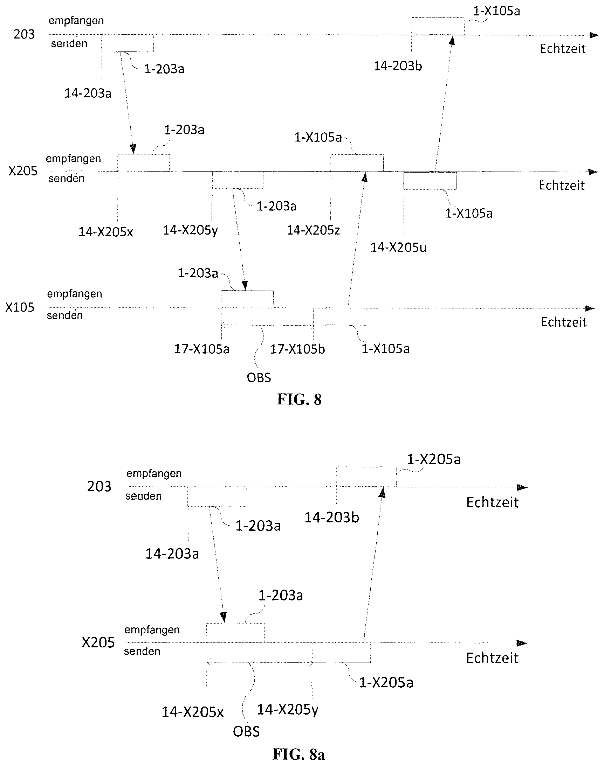

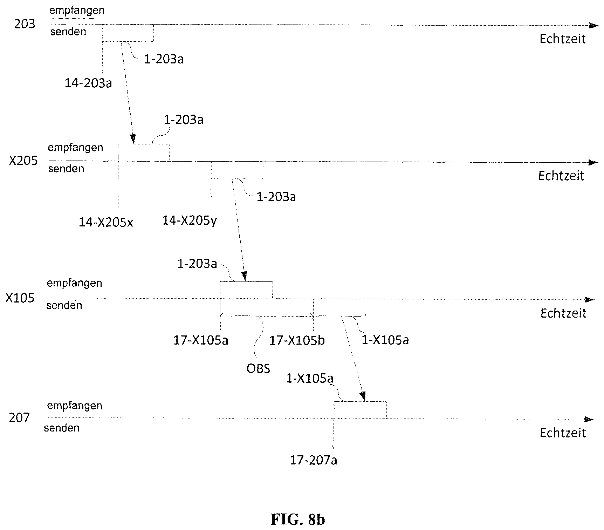

In Fig. 8 ist ein Beispiel deterministischer Kommunikation in einem Netzwerk wie in Fig. 7 an Hand eines Flussdiagrammes dargestellt. In diesem Beispiel wird davon ausgegangen, dass der Rechenknoten X105 und Sternkoppler X205 kein Kommunikationsschedule exekutieren, d.h., der Rechenknoten X105 verschickt keine zeitgesteuerte Nachrichten und Sternkoppler X205 leitet Nachrichten nicht nach einem Kommunikationsschedule weiter. Stattdessen reagiert der Rechenknoten X105 auf den Empfang einer Nachricht 1-203a, indem der Rechenknoten X105 eine Nachricht 1-X105a als Antwort versendet. Sternkoppler X205 leitet die zeitgesteuerte Nachricht 1-203a nach einem nicht zeitgesteuerten Prinzip weiter, zum Beispiel nach dem First-In First-Out (FIFO) Prinzip.

Generell gilt bei der vorliegenden Erfindung, dass eine erfindungsgemäß betrachtete Übertragungen immer mit einer zeitgesteuerten Übertragung, d.h., mit einer Übertragung nach einem Kommunikationsschedule startet, danach kann eine beliebige Sequenz von Übertragungen nach einem Kommunikationsschedule oder nicht nach einem Kommunikationsschedule (z.B. nach der First-Come First-Served Strategie) der gleichen Nachricht folgen.

Das Beispiel startet mit Sternkoppler 203, der eine zeitgesteuerte Nachricht 1-203a zum Zeitpunkt 14-203a an den Sternkoppler X205 sendet. Sternkoppler X205 empfängt die Nachricht 1-203a zum Zeitpunkt 14-X205x und leitet die Nachricht 1-203a zum Zeitpunkt 14-X205y an den Rechenknoten X105 weiter, wobei der Weiterleitungszeitpunkt 14-X205y nicht im Kommunikationsschedule erfasst ist, sich also dynamisch ergibt. Rechenknoten X105 empfängt die Nachricht 1-203a zum Zeitpunkt 17-X105a. Rechenknoten X105 reagiert auf den Empfang der Nachricht 1-203a mit dem Versenden einer neuen Nachricht 1-X105a an den Sternkoppler X205 zum Zeitpunkt 17-X105b. Sternkoppler X205 empfängt die Nachricht 1-X105a zum Zeitpunkt 14-X205z und leitet sie zum Zeitpunkt 14-X205u an den Sternkoppler 203 weiter, welcher die Nachricht zum Zeitpunkt 14-203b empfängt.

Das Beispiel in Fig. 8 verdeutlicht, dass (im Unterschied zum Beispiel in Fig. 5) die letzte Übertragung der Nachricht zu einem Rechenknoten, in diesem Beispiel Rechenknoten X105, nicht zwingend zeitgesteuert sein muss um eine deterministische Kommunikation zu ermöglichen. Da die Nachricht 1-203a ursprünglich von Sternkoppler 203 als zeitgesteuerte Nachricht verschickt wurde, kann die Determinismus-Eigenschaft transitiv erhalten bleiben, wenn das Kommunikationsschedule erstellt wird. D.h., die Nachricht 1-203a kann von Sternkopp-1er X205 als nicht zeitgesteuerte Nachricht an Rechenknoten X105 versendet werden, solange eine obere Schranke für die maximale zeitliche Verzögerung der Nachricht 1-203a im Sternkoppler X205 zum Zeitpunkt der Erstellung des Kommunikationsschedules bekannt ist. Eine solche Verzögerung kann mittels Methoden aus dem Stand der Technik, wie z.B. der Worst-Case Execution Time Analyse ermittelt werden.

"Determinismus" bezeichnet dabei ein zeitlich vorhersehbares Verhalten mit lediglich kleinem Fehler. Zeitlich vorhersehbar bedeutet dabei, dass die Kommunikation dahingehend optimiert ist, dass der Übertragungs-Jitter, das ist die Differenz von längst-möglicher und kürzest-möglicher Übertragungsdauer einer Nachricht, minimiert wird. Typische Werte für den Übertragungs-Jitter liegen, rein beispielhaft angeführt, im Bereich von einstelligen Mikrosekunden und darunter.

Transitiv erhalten bedeutet dabei, dass die gute Qualität des Übertragungs-Jitters, die durch die zeitgesteuerte Kommunikation erreicht wird, auch bei der erfindungsgemäßen Kommunikation, die teilweise nicht zeitgesteuert erfolgt, erhalten bleibt.

In Fig. 8a ist ein weiteres Beispiel deterministischer Kommunikation in einem Netzwerk wie in Fig. 7 an Hand eines Flussdiagrammes dargestellt. In diesem Beispiel wird davon ausgegangen, dass der Sternkoppler X205 kein Kommunikationsschedule exekutiert, d.h., der Sternkoppler X205 verschickt keine zeitgesteuerten Nachrichten. Stattdessen reagiert der Sternkoppler X205 auf den Empfang einer Nachricht 1-203a, indem der Sternkoppler X205 eine Nachricht 1-X205a als Antwort versendet.

In Fig. 8b ist noch ein weiteres Beispiel deterministischer Kommunikation in einem Netzwerk wie in Fig. 7 an Hand eines Flussdiagrammes dargestellt. Das Beispiel ist sehr ähnlich dem Beispiel in Fig. 8, mit dem Unterschied, dass Rechenknoten X105 die Antwortnachricht 1-X105a nicht an den Sternkoppler X205 versendet, sondern an einen andern Sternkoppler oder Rechenknoten, in diesem Beispiel Sternkoppler 207. Die Information, an welchen Sternkoppler und/oder welchen Rechenknoten ein Sternkoppler und/oder Rechenknoten ohne Kommunikationsschedule die Antwortnachricht 1-X105a verschicken soll, kann offline konfiguriert werden, oder kann Teil der Nachricht 1-203a, die zur Antwortnachricht 1-X105a führt, sein.

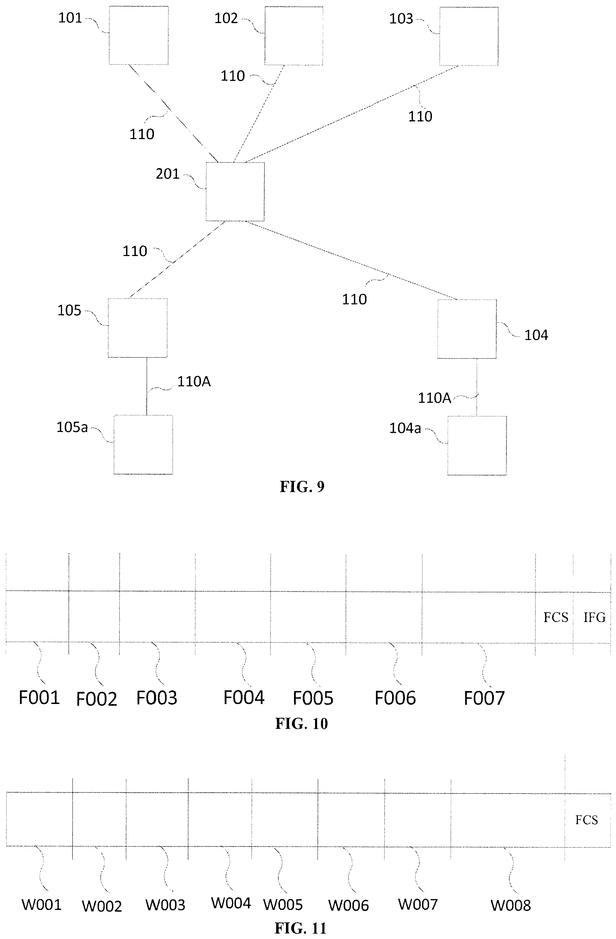

In Fig. 9 ist ein Netzwerk entsprechend Fig. 1 dargestellt. Darüber hinaus gehend sind in Fig. 9 auch ein Sensor 104a und ein Aktuator 105a dargestellt, die jeweils über lokale Kommunikationsleitungen 110A mit den Rechenknoten 104 bzw. 105 verbunden sind. In solch einem verteilten Echtzeitsystem kann der Empfang einer zeitgesteuerten Nachricht 1-201a vom Sternkoppler 201 im Rechenknoten 104 dazu führen, dass der Rechenknoten 104 den aktuellen Wert des Sensors 104a ausliest. Analog kann der Empfang einer zeitgesteuerten Nachricht 1-201a vom Sternkoppler 201 im Rechenknoten 105 dazu führen, dass der Rechenknoten 105 den Zustand des Aktuators 105a ändert.

In Fig. 10 ist das Ethernet Nachrichten Format dargestellt als Beispiel für Nachrichten, die in einem verteilten Echtzeitsystem über kabelgebundene Verbindungen kommuniziert werden können. Wie dargestellt besteht das Ethernet Nachrichten Format aus unterschiedlichen Feldern F001 - F007, FCS, IFG. Ein Rechenknoten 104, 105, X104, X105 und/oder Sternkopp-1er X204, X205 jeweils ohne Kommunikationsschedule kann anhand eines oder mehrerer der Felder F001 - F007 in einer empfangenen Nachricht erkennen (die Felder FCS, IFG sind nicht von Bedeutung), dass auf die empfangene Nachricht reagiert werden soll, z.B.
- indem eine neue Nachricht als Antwort versendet wird, und/oder
- indem ein lokaler Sensor ausgelesen wird, und/oder
- indem ein lokaler Aktuator angesteuert wird, und/oder
- indem eine Applikation ausgeführt wird, und/oder
- indem die Nachricht nicht nach einem Kommunikationsschedule weitergeleitet wird.

In Fig. 11 ist das Nachrichten Format des IEEE 802.11 Standards dargestellt als Beispiel für Nachrichten, die in einem verteilten Echtzeitsystem über kabellose Verbindungen kommuniziert werden können. Wie dargestellt besteht das Nachrichten Format aus unterschiedlichen Feldern W001 - W008, FCS. Ein Rechenknoten 104, 105, X104, X105 und/oder Sternkoppler X204, X205 jeweils ohne Kommunikationsschedule kann anhand eines oder mehrerer der Felder W001 - W008 in einer empfangenen Nachricht erkennen dass auf die empfangene Nachricht reagiert werden soll, z.B.
- indem eine neue Nachricht als Antwort versendet wird, und/oder
- indem ein lokaler Sensor ausgelesen wird, und/oder
- indem ein lokaler Aktuator angesteuert wird, und/oder
- indem eine Applikation ausgeführt wird, und/oder
- indem die Nachricht nicht nach einem Kommunikationsschedule weitergeleitet wird.

Beispielsweise kann vorgesehen sein, dass der Inhalt des bzw. der oben genannten Felder bzw. allgemein der Inhalt eines oder mehrerer Felder einer Nachricht, welche Felder bzw. welcher Inhalt für die Reaktion einer empfangenden Komponente relevant ist/ sind, zum Zeitpunkt der Konfiguration des Netzwerkes, also insbesondere bevor das Netzwerk seinen geplanten Zweck ausführt, konfiguriert wird, und z.B. in den jeweiligen Komponenten gespeichert wird.

## Patentansprüche

1. Verfahren zur Übertragung von Nachrichten in einem Computernetzwerk, wobei das Computernetzwerk Rechenknoten (101-105, X104, X105) umfasst, welche Rechenkoten (101-105) über zumindest einen Sternkoppler (201, 203, 205, 207, X204, X205) und/oder zumindest ein Multi-Hop Netzwerk (1000) miteinander verbunden sind, wobei jeder Rechenknoten (101-105, X104, X105) über zumindest eine Kommunikationsverbindung (110) mit dem zumindest einen Sternkoppler (201, 203, 205, 207, X204, X205) und/oder dem zumindest einen Multi-Hop Netzwerk (1000) verbunden ist, und wobei die Rechenknoten (101-105, X104, X105) untereinander und mit dem zumindest einen Sternkoppler (201, 203, 205, 207, X204, X205) und/oder dem zumindest einen Multi-Hop Netzwerk (1000) Nachrichten austauschen, wobei
-) eine erste Gruppe von Komponenten vorgesehen ist, wobei die Komponenten der ersten Gruppe zeitgesteuerte Nachrichten nach einem Kommunikationsschedule versenden und/oder weiterleiten und/oder empfangen, wobei die erste Gruppe eine, zwei oder mehrere Komponente(n) umfasst, und wobei jede Komponente der ersten Gruppe entweder ein Rechenknoten (101, 102, 103), ein Sternkoppler (201, 203, 205, 207) oder ein Sternkoppler eines Multi-Hop Netzwerkes ist, und wobei
-) eine zweite Gruppe von Komponenten vorgesehen ist, wobei die Komponenten der zweiten Gruppe Nachrichten nicht nach einem Kommunikationsschedule versenden und/oder weiterleiten und/oder empfangen, wobei die zweite Gruppe eine, zwei oder mehrere Komponente(n) umfasst, und wobei jede Komponente der zweiten Gruppe entweder ein Rechenknoten (104, 105, X104, X105), ein Sternkoppler (X204, X205) oder ein Sternkoppler eines Multi-Hop Netzwerkes ist,
-) zumindest eine Komponente (101, 102, 103, 201, 203, 205, 207) der ersten Gruppe von Komponenten eine, zwei, oder mehrere zeitgesteuerte Nachrichten entsprechend dem Kommunikationsschedule an eine, zwei oder mehrere Komponenten (104, 105, X104, X105, X204, X205) der zweiten Gruppe von Komponenten sendet,
**dadurch gekennzeichnet, dass**
-) jeder der Rechenknoten (104, 105, X104, X105) der zweiten Gruppe von Komponenten auf den Empfang einer zeitgesteuerten Nachricht auf eine der folgenden Weisen reagiert:
*) Auslesen eines aktuellen Wertes/der aktuellen Werte von einem/von zwei oder mehreren lokalen Sensor/Sensoren;
*) Ändern des Zustandes bzw. der Zustände eines oder mehrerer lokaler Aktoren;
*) Ausführen einer anwendungsspezifischen Aufgabe;
*) Versenden einer neue Nachricht (1-104a, 1-105a, 1-X105a),
und/oder
-) jeder Sternkoppler (X204, X205) der zweiten Gruppe von Komponenten auf den Empfang einer zeitgesteuerten Nachricht auf eine der folgenden Weisen reagiert:
*) Versenden einer neuen Nachricht (1-X205a), oder
*) Weiterleiten der empfangenen, zeitgesteuerten Nachricht, wobei die Weiterleitung nicht nach einem Kommunikationsschedule erfolgt,
wobei für den maximal zulässigen zeitlichen Abstand zwischen dem Empfangszeitpunkt (17-104a) einer zeigesteuerten Nachricht bei einer Komponente der zweiten Gruppe und dem Zeitpunkt der Reaktion dieser Komponente der zweiten Gruppe, insbesondere dem Sendezeitpunkt (17-104b) des Sendens einer Nachricht dieser Komponente der zweiten Gruppe, eine obere Schranke (OBS) vorgesehen ist.

2. Verfahren nach Anspruch 1, **dadurch gekennzeichnet, dass** eine, zwei oder mehrere der Kommunikationsverbindungen (110), beispielsweise alle Kommunikationsverbindungen kabelgebunden sind.

3. Verfahren nach Anspruch 1 oder 2, **dadurch gekennzeichnet, dass** eine, zwei oder mehrere der Kommunikationsverbindungen (110), beispielsweise alle Kommunikationsverbindungen kabellos realisiert sind, wobei beispielsweise Sendezeitpunkte der zeitgesteuerten Nachrichten im Kommunikationsschedule derart gewählt sind, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

4. Verfahren nach einem der Ansprüche 1 bis 3, **dadurch gekennzeichnet, dass** zwei oder mehr Sternkoppler der ersten Gruppe von Komponenten gleichzeitig oder zu überlappenden Zeitpunkten zeitgesteuerte Nachrichten an Rechenknoten schicken und/oder weiterleiten.

5. Verfahren nach einem der Ansprüche 2 bis 4, **dadurch gekennzeichnet, dass** die Übertragung von Nachrichten über kabelgebundene Kommunikationsverbindungen nach einem IEEE 802.3 Standard oder einem darauf aufbauenden oder nachfolgenden Standard basiert, und/oder die Übertragung von Nachrichten über kabellose Kommunikationsverbindungen nach einem IEEE 802.11 Standard oder einem darauf aufbauenden oder nachfolgenden Standard basiert oder nach einem IEEE 802.15 Standard oder einem darauf aufbauenden oder nachfolgenden Standard basiert.

6. Verfahren nach einem der Ansprüche 1 bis 5, **dadurch gekennzeichnet, dass** für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

7. Verfahren nach einem der Ansprüche 1 bis 6, **dadurch gekennzeichnet, dass** jede Komponente der zweiten Gruppe Nachrichten in einem konstanten Zeitabstand vor Erreichen ihrer oberen Schranke (OBS) reagiert, insbesondere Nachrichten versendet, wobei der konstante Zeitabstand vorzugsweise gegen Null geht.

8. Verfahren nach einem der Ansprüche 1 bis 7, **dadurch gekennzeichnet, dass** die obere Schranke (OBS) mit der Worst-Case Execution Time Analyse berechnet wird.

9. Computernetzwerk zur Übertragung von Nachrichten, wobei das Computernetzwerk Rechenknoten (101-105, X104, X105) umfasst, welche Rechenkoten (101-105) über zumindest einen Sternkoppler (201, 203, 205, 207, X204, X205) und/oder zumindest ein Multi-Hop Netzwerk (1000) miteinander verbunden sind, wobei jeder Rechenknoten (101-105, X104, X105) über zumindest eine Kommunikationsverbindung (110) mit dem zumindest einen Sternkoppler (201, 203, 205, 207, X204, X205) und/oder dem zumindest einen Multi-Hop Netzwerk (1000) verbunden ist, und wobei die Rechenknoten (101-105, X104, X105) untereinander und mit dem zumindest einen Sternkoppler (201, 203, 205, 207, X204, X205) und/oder dem zumindest einen Multi-Hop Netzwerk (1000) Nachrichten austauschen, wobei
-) eine erste Gruppe von Komponenten vorgesehen ist, wobei die Komponenten der ersten Gruppe dazu eingerichtet ist, zeitgesteuerte Nachrichten nach einem Kommunikationsschedule zu versenden und/oder weiterzuleiten und/oder zu empfangen, wobei die erste Gruppe eine, zwei oder mehrere Komponente(n) umfasst, und wobei jede Komponente der ersten Gruppe entweder ein Rechenknoten (101, 102, 103), ein Sternkoppler (201, 203, 205, 207) oder ein Sternkoppler eines Multi-Hop Netzwerkes ist, und wobei
-) eine zweite Gruppe von Komponenten vorgesehen ist, wobei die Komponenten der zweiten Gruppe nicht dazu eingerichtet ist, Nachrichten nach einem Kommunikationsschedule zu versenden und/oder weiterzuleiten und/oder zu empfangen, wobei die zweite Gruppe eine, zwei oder mehrere Komponente(n) umfasst, und wobei jede Komponente der zweiten Gruppe entweder ein Rechenknoten (104, 105, X104, X105), ein Sternkoppler (X204, X205) oder ein Sternkoppler eines Multi-Hop Netzwerkes ist,
-) zumindest eine Komponente (101, 102, 103, 201, 203, 205, 207) der ersten Gruppe von Komponenten dazu eingerichtet ist, eine, zwei, oder mehrere zeitgesteuerte Nachrichten entsprechend dem Kommunikationsschedule an eine, zwei oder mehrere Komponenten (104, 105, X104, X105, X204, X205) der zweiten Gruppe von Komponenten zu senden, **dadurch gekennzeichnet, dass**
-) jeder der Rechenknoten (104, 105, X104, X105) der zweiten Gruppe von Komponenten dazu eingerichtet ist, auf den Empfang einer zeitgesteuerten Nachricht auf eine der folgenden Weisen zu reagieren:
*) Auslesen eines aktuellen Wertes/der aktuellen Werte von einem/von zwei oder mehreren lokalen Sensor/Sensoren;
*) Ändern des Zustandes bzw. der Zustände eines oder mehrerer lokaler Aktoren;
*) Ausführen einer anwendungsspezifischen Aufgabe;
*) Versenden einer neue Nachricht (1-104a, 1-105a, 1-X105a),
und/oder
-) jeder Sternkoppler (X204, X205) der zweiten Gruppe von Komponenten dazu eingerichtet ist, auf den Empfang einer zeitgesteuerten Nachricht auf eine der folgenden Weisen zu reagieren:
*) Versenden einer neuen Nachricht (1-X205a), oder *) Weiterleiten der empfangenen, zeitgesteuerten Nachricht, wobei die Weiterleitung nicht nach einem Kommunikationsschedule erfolgt, und wobei für den maximal zulässigen zeitlichen Abstand zwischen dem Empfangszeitpunkt (17-104a) einer zeigesteuerten Nachricht bei einer Komponente der zweiten Gruppe und dem Zeitpunkt der Reaktion dieser Komponente der zweiten Gruppe, insbesondere dem Sendezeitpunkt (17-104b) des Sendens einer Nachricht dieser Komponente der zweiten Gruppe, eine obere Schranke (OBS) vorgesehen ist.

10. Computernetzwerk nach Anspruch 9, **dadurch gekennzeichnet, dass** eine, zwei oder mehrere der Kommunikationsverbindungen (110), beispielsweise alle Kommunikationsverbindungen kabelgebunden sind.

11. Computernetzwerk nach Anspruch 9 oder 10, **dadurch gekennzeichnet, dass** eine, zwei oder mehrere der Kommunikationsverbindungen (110), beispielsweise alle Kommunikationsverbindungen kabellos realisiert sind, wobei beispielsweise Sendezeitpunkte der zeitgesteuerten Nachrichten im Kommunikationsschedule derart gewählt sind, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

12. Computernetzwerk nach einem der Ansprüche 9 bis 11, **dadurch gekennzeichnet, dass** zwei oder mehr Sternkoppler der ersten Gruppe von Komponenten gleichzeitig oder zu überlappenden Zeitpunkten zeitgesteuerte Nachrichten an Rechenknoten schicken und/oder weiterleiten.

13. Computernetzwerk nach einem der Ansprüche 8 bis 12, **dadurch gekennzeichnet, dass** die Übertragung von Nachrichten über kabelgebundene Kommunikationsverbindungen nach einem IEEE 802.3 Standard oder einem darauf aufbauenden oder nachfolgenden Standard basiert, und/oder die Übertragung von Nachrichten über kabellose Kommunikationsverbindungen nach einem IEEE 802.11 Standard oder einem darauf aufbauenden oder nachfolgenden Standard basiert oder nach einem IEEE 802.15 Standard oder einem darauf aufbauenden oder nachfolgenden Standard basiert.

14. Computernetzwerk nach einem der Ansprüche 9 bis 13, **dadurch gekennzeichnet, dass** für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

15. Computernetzwerk nach einem der Ansprüche 9 bis 14, **dadurch gekennzeichnet, dass** jede Komponente der zweiten Gruppe Nachrichten in einem konstanten Zeitabstand vor Erreichen ihrer oberen Schranke (OBS) reagiert, insbesondere Nachrichten versendet, wobei der konstante Zeitabstand vorzugsweise gegen Null geht.

16. Computernetzwerk nach einem der Ansprüche 9 bis 15, **dadurch gekennzeichnet, dass** die obere Schranke (OBS) mit der Worst-Case Execution Time Analyse berechnet wird.

## Claims

1. Method for transmitting messages in a computer network, wherein the computer network comprises computing nodes (101-105, X104, X105), which computing nodes (101-105) are connected to each other via at least one star coupler (201, 203, 205, 207, X204, X205) and/or at least one multi-hop network (1000), wherein each computing node (101-105, X104, X105) is connected via at least one communication connection (110) to the at least one star coupler (201, 203, 205, 207, X204, X205) and/or to the at least one multi-hop network (1000), and wherein the computing nodes (101-105, X104, X105) exchange messages with each other and with the at least one star coupler (201, 203, 205, 207, X204, X205) and/or the at least one multi-hop network (1000), wherein
-) a first group of components is provided, wherein the components of the first group send and/or relay and/or receive time-triggered messages according to a communication schedule, wherein the first group comprises one, two or a plurality of component(s), and wherein each component of the first group is either a computing node (101, 102, 103), a star coupler (201, 203, 205, 207) or a star coupler of a multi-hop network, and wherein
-) a second group of components is provided, wherein the components of the second group do not send and/or relay and/or receive messages according to a communication schedule, wherein the second group comprises one, two or a plurality of component(s), and wherein each component of the second group is either a computing node (104, 105, X104, X105), a star coupler (X204, X205) or a star coupler of a multi-hop network,
-) at least one component (101, 102, 103, 201, 203, 205, 207) of the first group of components sends one, two, or a plurality of time-triggered messages according to the communication schedule to one, two or a plurality of components (104, 105, X104, X105, X204, X205) of the second group of components,
**characterized in that**
-) each of the computing nodes (104, 105, X104, X105) of the second group of components responds to the receipt of a time-triggered message in one of the following ways:
*) reading a current value/the current values of one/of two or a plurality of local sensor /sensors;
*) changing the state or states of one or a plurality of local actuators;
*) executing an application-specific task;
*) sending a new message (1-104a, 1-105a, 1-X105a),
and/or
-) each star coupler (X204, X205) of the second group of components responds to the receipt of a time-triggered message in one of the following ways:
*) sending a new message (1-X205a), or
*) relaying the received, time-triggered message, wherein the relaying is not performed according to a communication schedule,
wherein an upper limit (OBS) is provided for the maximum permissible time interval between the time of receipt (17-104a) of a time-triggered message at a component of the second group and the time of the response of this component of the second group, in particular the transmission time (17-104b) of the transmission of a message from this component of the second group.

2. Method according to Claim 1, **characterized in that** one, two or a plurality of the communication connections (110), for example all communication connections, are wired.

3. Method according to Claim 1 or 2, **characterized in that** one, two or a plurality of the communication connections (110), for example all communication connections, are implemented wirelessly, wherein, for example, transmission times of the time-triggered messages in the communication schedule are selected in such a way that time-triggered messages are sent simultaneously or in an overlapping manner only on those wireless communication connections in which no interfering influence of the message transmission is present.

4. Method according to any one of Claims 1 to 3, **characterized in that** two or more star couplers of the first group of components send and/or relay time-triggered messages to computing nodes simultaneously or at overlapping times.

5. Method according to any one of Claims 2 to 4, **characterized in that** the transmission of messages via wired communication connections is based upon an IEEE 802.3 standard or a standard based thereon or subsequent thereto, and/or the transmission of messages via wireless communication connections is based upon an IEEE 802.11 standard or a standard based thereon or subsequent thereto or upon an IEEE 802.15 standard or a standard based thereon or subsequent thereto.

6. Method according to any one of Claims 1 to 5, **characterized in that** one or more of the following standards or standards based thereon or subsequent thereto is/are used for time-triggered communication: SAE AS6802, IEEE 802.1Q, IEEE 802.1AS, IEEE 1588.

7. Method according to any one of Claims 1 to 6, **characterized in that** each component of the second group responds to messages, in particular sends messages, at a constant time interval before its upper limit (OBS) is reached, wherein the constant time interval is preferably close to zero.

8. Method according to any one of Claims 1 to 7, **characterized in that** the upper limit (OBS) is calculated with the worst-case execution time analysis.

9. Computer network for transmitting messages, wherein the computer network comprises computing nodes (101-105, X104, X105), which computing nodes (101-105) are connected to each other via at least one star coupler (201, 203, 205, 207, X204, X205) and/or at least one multi-hop network (1000), wherein each computing node (101-105, X104, X105) is connected via at least one communication connection (110) to the at least one star coupler (201, 203, 205, 207, X204, X205) and/or to the at least one multi-hop network (1000), and wherein the computing nodes (101-105, X104, X105) exchange messages with each other and with the at least one star coupler (201, 203, 205, 207, X204, X205) and/or the at least one multi-hop network (1000),
wherein
-) a first group of components is provided, wherein the components of the first group are configured to send and/or relay and/or receive time-triggered messages according to a communication schedule, wherein the first group comprises one, two or a plurality of component(s), and wherein each component of the first group is either a computing node (101, 102, 103), a star coupler (201, 203, 205, 207) or a star coupler of a multi-hop network, and wherein
-) a second group of components is provided, wherein the components of the second group are not configured to send and/or relay and/or receive messages according to a communication schedule, wherein the second group comprises one, two or a plurality of component(s), and wherein each component of the second group is either a computing node (104, 105, X104, X105), a star coupler (X204, X205) or a star coupler of a multi-hope network,
-) at least one component (101, 102, 103, 201, 203, 205, 207) of the first group of components is configured to send one, two, or a plurality of time-triggered messages according to the communication schedule to one, two or a plurality of components (104, 105, X104, X105, X204, X205) of the second group of components,
**characterized in that**
-) each of the computing nodes (104, 105, X104, X105) of the second group of components is configured to respond to the receipt of a time-triggered message in one of the following ways:
*) reading out a current value/the current values of one/of two or a plurality of local sensor/sensors;
*) changing the state or states of one or a plurality of local actuators;
*) executing an application-specific task;
*) sending a new message (1-104a, 1-105a, 1-X105a),
and/or
-) each star coupler (X204, X205) of the second group of components is configured to respond to the receipt of a time-triggered message in one of the following ways:
*) sending a new message (1-X205a), or
*) relaying the received time-triggered message, wherein the relaying does not take place according to a communication schedule and wherein an upper limit (OBS) is provided for the maximum permissible time interval between the time of receipt (17-104a) of a time-triggered message at a component of the second group and the time of the response of this component of the second group, in particular the transmission time (17-104b) of the transmission of a message of this component of the second group.

10. Computer network according to Claim 9, **characterized in that** one, two or a plurality of the communication connections (110), for example all communication connections, are wired.

11. Computer network according to claim 9 or 10, **characterized in that** one, two or a plurality of the communication connections (110), for example all communication connections, are implemented wirelessly, wherein, for example, transmission times of the time-triggered messages in the communication schedule are selected in such a way that time-triggered messages are sent simultaneously or in an overlapping manner only on those wireless communication connections in which no interfering influence of the message transmission is present.

12. Computer network according to any one of Claims 9 to 11, **characterized in that** two or more star couplers of the first group of components send and/or relay time-triggered messages to computing nodes simultaneously or at overlapping times.

13. Computer network according to any one of Claims 8 to 12, **characterized in that** the transmission of messages via wired communication connections is based upon an IEEE 802.3 standard or a standard based thereon or subsequent thereto, and/or the transmission of messages via wireless communication connections is based upon an IEEE 802.11 standard or a standard based thereon or subsequent thereto, or upon an IEEE 802.15 standard or a standard based thereon or subsequent thereto.

14. Computer network according to any one of Claims 9 to 13, **characterized in that** one or more of the following standards or standards based thereon or subsequent thereto is/are used for time-triggered communication: SAE AS6802, IEEE 802.1Q, IEEE 802.1AS, IEEE 1588.

15. Computer network according to any one of Claims 9 to 14, **characterized in that** each component of the second group responds to messages, in particular sends messages, at a constant time interval before its upper limit (OBS) is reached, wherein the constant time interval is preferably close to zero.

16. Computer network according to any one of Claims 9 to 15, **characterized in that** the upper limit (OBS) is calculated with the worst case execution time analysis.

## Revendications

1. Procédé de transmission de messages dans un réseau d'ordinateurs, dans lequel le réseau d'ordinateurs comporte des noeuds de calcul (101-105, X104, X105), lesquels noeuds de calcul (101-105) sont reliés les uns aux autres par l'intermédiaire d'au moins un coupleur en étoile (201, 203, 205, 207, X204, X205) et/ou d'au moins un réseau à sauts multiples (1000), dans lequel chaque noeud de calcul (101-105, X104, X105) est relié audit moins un coupleur en étoile (201, 203, 205, 207, X204, X205) et/ou audit moins un réseau à sauts multiples (1000) par l'intermédiaire d'au moins une liaison de communication (110), et dans lequel les noeuds de calcul (101-105, X104, X105) échangent des messages les uns avec les autres et avec ledit au moins un coupleur en étoile (201, 203, 205, 207, X204, X205) et/ou ledit au moins un réseau à sauts multiples (1000), dans lequel
- un premier groupe de composants est prévu, les composants du premier groupe envoyant et/ou transférant et/ou recevant des messages à commande temporelle selon une planification de communication, le premier groupe comportant un, deux composants ou plus, et chaque composant du premier groupe étant un noeud de calcul (101, 102, 103) ou un coupleur en étoile (201, 203, 205, 207) ou un coupleur en étoile d'un réseau à sauts multiples, et dans lequel
- un second groupe de composants est prévu, les composants du second groupe n'envoyant pas et/ou ne transférant pas et/ou ne recevant pas de messages selon une planification de communication, le second groupe comportant un, deux composants ou plus, et chaque composant du second groupe étant un noeud de calcul (104, 105, X104, X105) ou un coupleur en étoile (X204, X205) ou un coupleur en étoile d'un réseau à sauts multiples,
- au moins un composant (101, 102, 103, 201, 203, 205, 207) du premier groupe de composants envoyant un, deux messages à commande temporelle ou plus selon la planification de communication sur un, deux composants (104, 105, X104, X105, X204, X205) ou plus du second groupe de composants,
**caractérisé par le fait que**
- chacun des noeuds de calcul (104, 105, X104, X105) du second groupe de composants réagit lors de la réception d'un message à commande temporelle selon l'une des façons suivantes :
*) lecture d'une valeur actuelle/de valeurs actuelles d'un capteur local/de deux capteurs locaux ou plus ;
*) changement de l'état ou des états d'un ou plusieurs acteurs locaux ;
*) exécution d'une tâche spécifique à l'application ;
*) envoi d'un nouveau message (1-104a, 1-105a, 1-X105a),
et/ou
- chacun des coupleurs en étoile (X204, X205) du second groupe de composants réagit lors de la réception d'un message à commande temporelle selon l'une des façons suivantes :
*) envoi d'un nouveau message (1-X205a), ou
*) transfert du message à commande temporelle reçu, le transfert n'ayant pas lieu selon une planification de communication,
dans lequel une limite supérieure (OBS) est prévue pour l'intervalle de temps admissible maximal entre le moment de réception (17-104a) d'un message à commande temporelle avec un composant du second groupe et le moment de la réaction de ce composant du second groupe, en particulier le moment d'envoi (17-104b) de l'envoi d'un message de ce composant du second groupe.

2. Procédé selon la revendication 1, **caractérisé par le fait que** une, deux liaisons de communication (110) ou plus, par exemple toutes les liaisons de communication, sont filaires.

3. Procédé selon l'une des revendications 1 ou 2, **caractérisé par le fait que** une, deux liaisons de communication (110) ou plus, par exemple toutes les liaisons de communication sont sans fil, par exemple des moments d'envoi des messages à commande temporelle dans la planification de communication étant choisis de telle sorte que les messages à commande temporelle sont envoyés simultanément ou seulement chevauchant les liaisons de communication sans fil pour lesquelles aucun brouillage de la transmission des messages n'existe.

4. Procédé selon l'une des revendications 1 à 3, **caractérisé par le fait que** deux coupleurs en étoile ou plus du premier groupe de composants envoient et/ou transfèrent aux noeuds de calcul des messages à commande temporelle simultanément ou à des moments qui se chevauchent.

5. Procédé selon l'une des revendications 2 à 4, **caractérisé par le fait que** la transmission de messages par l'intermédiaire de liaisons de communication filaires est basée sur une Norme IEEE 802.3 ou une norme s'appuyant sur celle-ci ou la suivant, et/ou la transmission de messages par l'intermédiaire de liaison de communication sans fil est basée sur une Norme IEEE 802.11 ou une norme s'appuyant sur celle-ci ou la suivant ou est basée sur une Norme IEEE 802.15 ou une norme s'appuyant sur celle-ci ou la suivant.

6. Procédé selon l'une des revendications 1 à 5, **caractérisé par le fait que,** pour une communication à commande temporelle, une ou plusieurs des normes suivantes ou des normes s'appuyant sur celles-ci ou les suivant est/sont utilisées : SAE AS6802, IEEE 802.1Q, IEEE 802.1AS, IEEE 1588.

7. Procédé selon l'une des revendications 1 à 6, **caractérisé par le fait que** chaque composant du second groupe réagit à des messages dans un intervalle de temps constant avant d'atteindre sa limite supérieure (OBS), en particulier envoie des messages, dans lequel l'intervalle de temps constant s'approche de préférence de 0.

8. Procédé selon l'une des revendications 1 à 7, **caractérisé par le fait que** la limite supérieure (OBS) est calculée avec l'analyse de temps d'exécution de pire cas.

9. Réseau d'ordinateurs pour la transmission de message, le réseau d'ordinateurs comportant des noeuds de calcul (101-105, X104, X105), lesquels noeuds de calcul (101-105) sont connectés les uns aux autres par l'intermédiaire d'au moins un coupleur en étoile (201, 203, 205, 207, X204, X205) et/ou d'au moins un réseau à sauts multiples (1000), chaque noeud de calcul (101-105, X104, X105) étant connecté audit au moins un coupleur en étoile (201, 203, 205, 207, X204, X205) et/ou audit au moins un réseau à sauts multiples (1000) par l'intermédiaire d'au moins une liaison de communication (110), et les noeuds de calcul (101-105, X104, X105) échangeant des messages les uns avec les autres et avec ledit au moins un coupleur en étoile (201, 203, 205, 207, X204, X205) et/ou avec ledit au moins un réseau à sauts multiples (1000),
dans lequel
- un premier groupe de composants est prévu, les composants du premier groupe étant également configurés pour envoyer et/ou transférer et/ou recevoir des messages à commande temporelle selon une planification de communication, le premier groupe comportant un, deux composants ou plus, et chaque composant du premier groupe étant un noeud de calcul (101, 102, 103), un coupleur en étoile (201, 203, 205, 207) ou un coupleur en étoile d'un réseau à sauts multiples, et dans lequel
- un second groupe de composants est prévu, les composants du second groupe n'étant pas configurés pour envoyer et/ou transférer et/ou recevoir des messages selon une planification de communication, le second groupe comportant un, deux composants ou plus, et chaque composant du groupe étant un noeud de calcul (104, 105, X104, X105), un coupleur en étoile (X204, X205) ou un coupleur en étoile d'un réseau à sauts multiples,
- au moins un composant (101, 102, 103, 201, 203, 205, 207) du premier groupe de composants étant configuré pour envoyer un, deux messages à commande temporelle ou plus selon la planification de communication à un, deux composants (104, 105, X104, X105, X204, X205) ou plus du second groupe de composants,
**caractérisé par le fait que**
- chacun des noeuds de calcul (104, 105, X104, X105) du second groupe de composants est configuré pour réagir lors de la réception d'un message à commande temporelle selon l'une des façons suivantes :
*) lecture d'une valeur actuelle/de valeurs actuelles d'un capteur local/de deux capteurs locaux ou plus ;
*) changement de l'état ou des états d'un ou plusieurs acteurs locaux ;
*) exécution d'une tâche spécifique à une application ;
*) envoi d'un nouveau message (1-104a, 1-105a, 1-X105a),
et/ou
- chaque coupleur en étoile (X204, X205) du second groupe de composants est configuré pour réagir lors de la réception d'un message à commande temporelle selon l'une des façons suivantes :
*) envoi d'un nouveau message (1-X205a), ou
*) transfert du message à commande temporelle reçu, dans lequel le transfert ne se produit pas selon une planification de communication, et dans lequel, pour un intervalle temporel admissible maximal entre le moment de réception (17-104a) d'un message à commande temporelle avec un composant du second groupe et un moment de la réaction de ces composants du second groupe, en particulier de l'instant d'envoi (17-104b) de l'envoi d'un message de ces composants du second groupe, une limite supérieure (OBS) est prévue.

10. Réseau d'ordinateurs selon la revendication 9, **caractérisé par le fait que** une, deux liaisons de communication (110) ou plus, par exemple toutes les liaisons de communication, sont filaires.

11. Réseau d'ordinateur selon la revendication la revendication 9 ou 10, **caractérisé par le fait que** une, deux liaisons de communication (110) ou plus, par exemple toutes les liaisons de communication, sont sans fil, dans lequel par exemple des instants d'envoi des messages à commande temporelle dans la planification de communication sont choisis de telle sorte que les messages à commande temporelle sont envoyés simultanément ou chevauchant uniquement une liaison de communication sans fil respective, pour lesquelles aucun brouillage de la transmission de messages n'existe.

12. Réseau d'ordinateurs selon l'une des revendications 9 à 11, **caractérisé par le fait que** au moins deux coupleurs en étoile du premier groupe de composants envoient et/ou transfèrent des messages à commande temporelle aux noeuds de réseau simultanément ou à des moments qui se chevauchent.

13. Réseau d'ordinateurs selon l'une des revendications 8 à 12, **caractérisé par le fait que** la transmission de messages par l'intermédiaire de liaisons de communication filaires est basée sur une Norme IEEE 802.3 ou une norme basée sur celle-ci ou la suivant, et/ou la transmission de message par l'intermédiaire de liaisons de communication sans fil est basée sur une Norme IEEE 802.11 ou une norme basée sur celle-ci ou la suivant ou sur une Norme IEEE 802.15 ou une norme basée sur celle-ci ou la suivant.

14. Réseau d'ordinateurs selon l'une des revendications 9 à 13, **caractérisé par le fait que,** pour une communication à commande temporelle, une ou plusieurs des normes suivantes ou des normes basées sur celles-ci ou les suivant est/sont utilisées : SAE AS6802, IEEE 802.1Q, IEEE 802.1AS, IEEE 1588.

15. Réseau d'ordinateurs selon l'une des revendications 9 à 14, **caractérisé par le fait que** chaque composant du second groupe réagit à des messages dans un intervalle de temps constant après avoir atteint sa limite supérieure (OBS), en particulier envoie des messages, dans lequel l'intervalle de temps constant s'approche de préférence de 0.

16. Réseau d'ordinateurs selon l'une des revendications 9 à 15, **caractérisé par le fait que** la limite supérieure (OBS) est calculée avec l'analyse de temps d'exécution de pire cas.
